# EUROPÄISCHE PATENTSCHRIFT

(11) **EP 0 611 726 B1**
(45) Veröffentlichungstag und Bekanntmachung des Hinweises auf die Patenterteilung: **09.07.1997**
(21) Anmeldenummer: 94101521.6
(22) Anmeldetag: 02.02.1994
(51) Int. Cl.: B66F 19/00, B66C 17/00, B60S 5/00

(54) **Hebebrücke zum Einbau und Ausbau von Kraftfahrzeugteilen**
Lift for the installation and the removal of vehicle parts
Elévateur pour le montage et le démontage de composants de voitures

(30) Priorität: 19.02.1993 DE 9302395 U
(43) Veröffentlichungstag der Anmeldung: 24.08.1994
(73) Patentinhaber: Klann, Horst, D-78052 Villingen-Schwenningen (DE)
(72) Erfinder: Klann, Horst, D-78052 Villingen-Schwenningen (DE)
(74) Vertreter: Neymeyer, Franz, Dipl.-Ing. (FH)

(56) Entgegenhaltungen:
- DE-C- 269 095
- DE-U- 8 627 720
- FR-A- 2 506 806
- US-A- 2 848 120
- US-A- 3 768 676
- US-A- 4 030 705
- US-A- 4 928 927

## Beschreibung

Die Erfindung betrifft eine Hebebrücke zum Einbau und Ausbau von Kraftfahrzeugteilen mit einem Traggestell, das an beiden Enden einer teleskopartig ausziehbaren Tragschiene Stützlaschen mit Stützfüßen aufweist, durch welche es an den Rändern einer Motorraumöffnung der Karosserie abstützbar ist, und mit zwei auf dem Traggestell individuell verschiebbar geführten Hebeeinrichtungen, welche jeweils ein durch drehende Betätigung heb- und senkbares durch Selbsthemmung in seiner Lage verharrendes Hebeglied aufweisen.

Bei einer bekannten Hebebrücke dieser Art (DE 86 27 720 U1) bestehen die Hebeglieder aus seitlich an einer Tragschiene angeordneten vertikalen Gewindespindeln, die durch drehende Betätigung einer Flügelmutter in eine Motorraumöffnung absenkbar sind. Die Tragschiene besteht aus einem Vierkantrohr, auf welches ein eine Hebevorrichtung tragendes Führungsrohr formschlüssig undrehbar aber axial verschiebbar aufgeschoben ist. Die Gewindespindeln sind jeweils seitlich neben der Tragschiene angeordnet, so daß beim Anhängen einer Last an die unteren Enden der Gewindespindeln ein Kippmoment entsteht, welches die Hebebrücke als ganzes aus ihrer Verankerung an den Kotflügelrändern heraushebeln kann. Außerdem entsteht durch das Kippmoment eine sehr starke Klemmwirkung zwischen der Tragschiene und dem Führungsrohr, welche das axiale Verschieben der Hebevorrichtung unter Last sehr erschwert, wenn nicht unmöglich macht. Darüberhinaus gestatten die in sich starren Gewindespindeln nur eine Bewegung der daran befestigten Lasten in vertikaler Richtung und entlang der Tragschiene, quer dazu ist eine Bewegung der Last nicht möglich. Auch der maximale Arbeitshub ist begrenzt. Deshalb ist diese bekannte Hebebrücke nur beschränkt einsetzbar und beispielsweise zum schwebenden Aufhängen eines V-Motors nicht geeignet, um dessen Getriebe aus- oder einzubauen.

Aus der DE 37 32 837 C2 ist eine andere, eine Last von unten abstützende Hebeeinrichtung bekannt, die in die seitlichen Blattfederpakete, z.B. eines LKW's, eingehängt wird. Diese Vorrichtung weist nur eine mittig angeordnete, vertikale durch das Traggestell hindurchgeführte Gewindespindel mit einer oberen Tragplatte auf, auf die eine Last von oben aufsetzbar ist. Diese Hebevorrichtung gestattet zwar die mittige Abstützung der Last. Der Abstützungspunkt selber ist aber durch das nur wenig seitlich verschiebbare dreiteilige Traggestell im wesentlichen unverrückbar in der Mitte des Kraftfahrzeugs vorgegeben.

Ausgehend von diesem Stand der Technik liegt der Erfindung die Aufgabe zu Grunde, eine Hebebrücke der eingangs genannten Art zu schaffen, bei der sowohl eine höhere Standfestigkeit und Stabilität als auch ein größerer Arbeitshub sowie eine leichtere seitliche Verschiebbarkeit der Hebeeinrichtungen unter Last entlang des Traggestells gewährleistet ist und bei der die Tragglieder an den Hebeeinrichtungen so flexibel sind, daß sie Verlagerungen der aufgehängten Last nach allen Seiten auch über größere Abstände ohne weiteres ermöglicht.

Diese Aufgabe wird erfindungsgemäß dadurch gelöst, daß das Traggestell aus zwei in einem seitlichen Abstand parallel zueinander verlaufende teleskopartig ausziehbaren Tragschienen besteht, auf denen die Hebeeinrichtungen mittels Führungsrohren formschlüssig geführt sind, und daß die Hebeeinrichtungen ein jeweils zwischen den Tragschienen hindurchgeführtes flexibles Zugglied aufweisen, das mittels eines in Zugrichtung selbsthemmenden Schneckengetriebes der Hebeeinrichtung betätigbar ist.

Das zwischen den Tragschienen hindurchgeführte flexible Zugglied vermeidet Kippmomente und gewährleistet eine hohe Standfestigkeit und Stabilität bei zugleich leichter Bauweise der Hebebrücke. Da das Zugglied eine beliebige Länge haben kann, ist auch der davon abhängige Arbeitshub beliebig wählbar. Durch die auf Führungsrohren geführten Hebeeinrichtungen ergibt sich eine leichte seitliche Verschiebbarkeit der Hebeeinrichtungen auf dem Traggestell.

Durch die Ausgestaltung der Erfindung nach Anspruch 2 ergibt sich eine hohe Kraftuntersetzung, die das Heben großer Lasten bzw. das Drehen der Schnecke mit geringem Kraftaufwand ermöglicht. Außerdem ist dadurch der Schlüsselkopf, der beispielsweise mit einer Kurbel betätigt werden kann, leicht zugänglich, und es ist eine zuverlässige Selbsthemmung des Getriebes gewährleistet, die ein selbsttätiges Abwärtsbewegen der Zugglieder unter Last sicher verhindert.

Durch die Ausgestaltung nach Anspruch 3 ist bei hoher Zugfestigkeit zugleich eine große Flexibilität der Zugglieder gewährleistet, durch welche sich die daran aufgehängte Last schwebend nach allen Richtungen leicht verlagern läßt.

Durch die Ausgestaltung nach Anspruch 4 ist eine sichere Kettenführung und Handhabung gewährleistet, die aus sicherheitstechnischen Gründen unbedingt gegeben sein muß.

Durch die Ausgestaltung nach Anspruch 5 ist es möglich, die Stützfüße auf die vorgegebenen Schräglagen der Stützflächen der Karosserie so einzustellen, daß sich die Tragschienen in Gebrauchslage in einer Horizontalen befinden und damit die Gefahr des Umkippens des Traggestells vermieden wird.

Auch die Ausgestaltung nach Anspruch 6 dient der Lagestabilisierung des Gestells, indem die Stützfüße an den jeweiligen Verlauf der Stellfläche am Rand der Motorhaubenöffnung anpaßbar sind.

Die Ausgestaltung nach Anspruch 7 gibt eine stabile Fixierung der Stützbeine an den Stützlaschen, die insbesondere bei einer Schrägstellung der Stützbeine von Bedeutung ist, indem eine zusätzliche Klemmwirkung am Hebelarm des Stützbeines entsteht.

Schließlich werden durch die Ausgestaltungen nach Anspruch 8 und 9 gute Klemmverbindungen ohne zusätzliche Bauteile bzw. eine bessere Führungsstabilität und insbesondere größere Auflageflächen zwischen den Führungsrohren und den Tragschienen erzielt, die wiederum eine leichtere Verschiebbarkeit der Hebeeinrichtungen auf dem Traggestell ermöglichen.

Nachfolgend wird die Erfindung anhand der Zeichnung beispielhaft näher erläutert. Es zeigt:
- Fig. 1: in perspektivischer Ansicht eine Hebebrücke im Einsatz über der Motorraumöffnung eines Kraftfahrzeugs;
- Fig. 2: eine teilweise geschnittene Vorderansicht der Hebebrücke nach Fig. 1;
- Fig. 3: einen Schnitt III-III aus Fig. 2
- Fig. 4: einen Schnitt IV-IV aus Fig. 2 und
- Fig. 5: eine Hebeeinrichtung der Hebebrücke nach Fig. 2 in Draufsicht;.

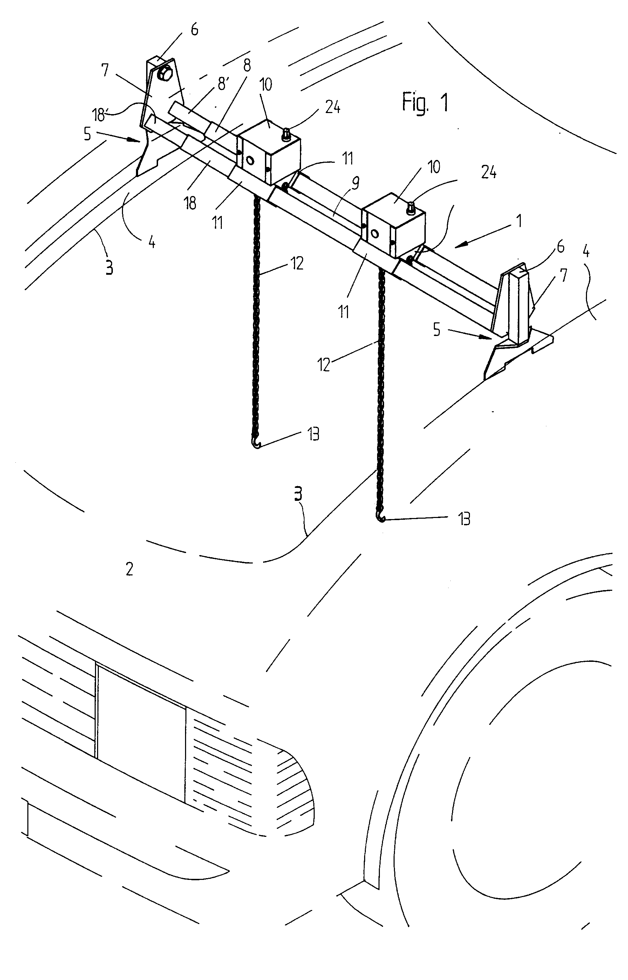

Die Fig. 1 zeigt eine Hebebrücke 1 im Einsatz über der Motorraumöffnung 2 eines Kraftfahrzeugs, bei dem die Motorhaube abgenommen oder hochgeklappt ist.

An den Rändern 3 der Motorhaubenöffnung 2 erstrecken sich in Fahrzeuglängsrichtung Kotflügelrillen 4, in denen sich die Stützfüße 5 der Hebebrücke 1 abstützen. Die Stützfüße 5 sind jeweils über vertikale Stützbeine 6 mit Stützlaschen 7 verbunden. An den beiden im wesentlichen trapezförmigen Stützlaschen 7 sind jeweils zwei in einem Abstand parallel zueinander ausgerichtete Tragschienen 8 und 18 bzw. 8' und 18' angeschweißt, zwischen denen sich ein Zwischenraum 9 befindet. Die hier verwendeten Tragschienen 8 und 8' bzw. 18 und 18' bestehen jeweils aus Rohren mit einem quadratischen Querschnitt, wobei die Tragschienen 8' und 18' jeweils mit leichtem Paßsitz teleskopartig in die Tragschienen 8 und 18 eingeschoben sind. Dadurch kann die Hebebrücke 1 in ihrer Länge auf die unterschiedlichsten Breiten der Motorraumöffnungen 2 einer Vielzahl von Kraftfahrzeugtypen eingestellt werden.

Statt der hier bevorzugten quadratischen Rohrprofile könnten auch rechteckige oder runde Rohrprofile verwendet werden. Vorteilhafterweise sind die beiden Tragschienen 8, 8', 18 und 18' an den Stützlaschen 7 so befestigt, daß jeweils eine ihrer Diametralebenen 32 in Gebrauchslage zumindest annähernd vertikal verläuft. Dadurch ergibt sich eine bessere Führungsstabilität und insbesondere eine größere Auflagefläche zwischen den im folgenden näher beschriebenen Führungsrohren 11 und den Tragschienen 8 und 18, womit eine leichtere Verschiebbarkeit zweier auf den Tragschienen 8, 18 gelagerter Hebeeinrichtungen 10 auch unter Last erreicht wird.

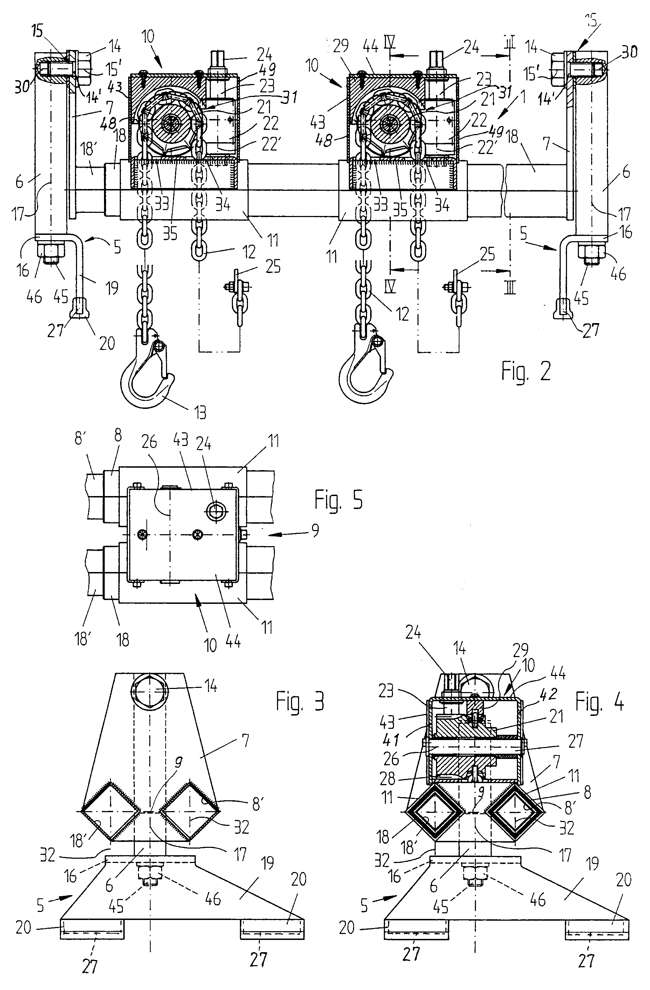

Die beiden Hebeeinrichtungen sind in ihrem Aufbau identisch. Jede Hebeeinrichtung 10 verfügt über jeweils zwei im geeigneten Abstand voneinander angeordnete, parallele Führungsrohre 11 mit quadratischem Querschnitt, die die Tragschienen 8 und 18 formschlüssig passend umfassen, so daß die Hebeeinrichtungen 10 auf den Tragschienen 8 und 18 über deren im wesentlichen vollständige Länge verschiebbar geführt sind. Jede Hebeeinrichtung 10 ist mit einem in Fig. 2 und 4 im Detail dargestellten Schneckengetriebe 31 zum Betätigen des flexiblen Zuggliedes 12 versehen, dessen nach unten hängende Abschnitte jeweils zwischen den Tragschienen 8 und 18 durch den Zwischenraum 9 hindurch geführt sind.

Bei dem Zugglied 12 handelt es sich um eine Gliederkette mit einem an ihrem unteren Ende befestigten Haken 13. Anstelle einer Gliederkette könnte in einer anderen Ausgestaltung der Hebevorrichtung auch ein Seil Verwendung finden.

Der Vorteil der Verwendung eines flexiblen Zuggliedes 12 liegt in der Möglichkeit, die daran aufgehängte Last in jeder Richtung horizontal zu verlagern, damit Befestigungspunkte an einem Kraftfahrzeugteil, z.B. eines Motors, erreicht werden können, die seitlich versetzt sind, um z.B. das Getriebe aus- oder einbauen zu können.

Die Führungsrohre 11 sind auf die Tragschienen 8 und 18 ringsum formschlüssig aufgeschoben und darauf leicht verschiebbar. Sie tragen jeweils paarweise eine Hebeeinrichtung 10. Diese Hebeeinrichtungen 10 bestehen jeweils aus einem Gehäuse 43, das mittig auf den beiden Führungsrohren 11 sitzend angeordnet ist. Das Gehäuse 43 ist gebildet aus einem rechteckig-U-förmig gebogenen Gehäuseteil 40 mit einer horizontalen oberen Deckwand 44, eine vorderen und einer hinteren Seitenwand 41, 42, die auf die Führungsrohre 11 aufgeschweißt und mit einem Gehäuseboden 35 versehen sind. Sirnseitig ist das Gehäuse 43 durch zwei angesetzte Stirnwände 48, 49 verschlossen. Der Gehäuseboden 35 weist im Bereich zwischen beiden Tragschienen an 8, 18 zwei Durchbrüche 33, 34 auf, durch welche die beiden frei nach unten hängenden Abschnitte der Gliederkette 12 hindurch geführt sind. Dabei ist das dem Haken 13 gegenüberliegende Ende der Gliederkette 12 mit einem Sperrglied 25 versehen, durch das ein unabsichtliches Herausfahren der Gliederkette 12 aus dem Gehäuse 43 verhindert wird.

Die Gliederkette 12 ist mit formschlüssigem Eingriff über ein Kettenrad 21 geführt, das im Gehäuse 43 um die horizontale Drehachse 26 drehbar gelagert ist.

Bei einer möglichen alternativen Verwendung eines Seiles als flexibles Zugglied müßte statt des Kettenrades 21 eine entsprechende Seiltrommel vorgesehen werden.

Das Kettenrad 21 ist einstückiger Bestandteil eines Schneckenrades 28, das mit einer Schnecke 22 in getrieblichem Eingriff steht. Diese Schnecke 22 sitzt auf einer Schneckenwelle 23, die einen oberseitig aus dem Gehäuse 43 herausragenden Schlüsselkopf 24 aufweist, an dem zur Betätigung des Schneckengetriebes 31 eine Kurbel mit einem 6-Kant-Drehschlüssel ansetzbar ist. Durch eine drehende Betätigung des Schlüsselkopfes 24 kann die Gliederkette 12 mit dem daran befestigten Haken 13 in den Motorraum herabgelassen werden. Dabei kann dann ein Motorteil, ein Getriebe oder ein anderer Gegenstand an die beiden Haken 13 der Hebeeinrichtungen 10 angehängt werden. Gegebenenfalls können auch die Hebeeinrichtungen 10 auf den Tragschienen 8 und 18 verschoben werden.

Wichtig bei dem Schneckentriebe 31 ist sein selbsthemmender Getriebeeingriff zwischen der Schnecke 21 und dem Schneckenrad 28. Durch ihn wird sichergestellt, daß das Kettenrad auch unter größter Last nicht ungewollt, d.h. nicht ohne beabsichtigte manuelle Betätigung der Schneckenwelle, drehen kann. Die an einer oder an beiden Gliederketten hängende Last kann somit sicher in jeder beliebigen Höhe schwebend gehalten und ggf. seitlich verlagert werden.

An der Unterseite der Deckwand 44 ist ein etwa halbkreisförmiges Kettenführungselement 29 befestigt und in dem Gehäuse 43 direkt oberhalb des Kettenrades 21 angeordnet. Es gewährleistet eine sichere Führung der Gliederkette im Eingriffsbereich mit dem Kettenrad 21, so daß sich eine zuverlässige Funktionssicherheit und Handhabung der Hebeeinrichtung 10 ergibt.

Von den insgesamt vier Tragschienen 8 und 18, bzw. 8' und 18' sind in Fig. 2 nur die beiden ineinander geschobenen vorderen Tragschienen 18 und 18' zu erkennen. Diese sind jeweils an ihren Enden mit den Stützlaschen 7 verschweißt.
Die Stützlaschen 7 sind jeweils durch zueinander koaxiale Ansatzschrauben 14, die jeweils einen zylindrischen Lageransatz 14' aufweisen, pendelfähig an einem Stützbein 6 befestigt. Diese festsitzend in horizontale Gewindebohrungen 30 eingeschraubten Ansatzschrauben 14 bilden jeweils Pendelgelenke 15 mit einer gemeinsamen, horizontalen Pendelachse 15', um welche die Stützlaschen 7 mit den Tragschienen 8, 8' bzw. 18, 18' lose schwenkbar sind. Dadurch können eventuelle Schieflagen der Kotflügelrillen 4, in denen sich die Stützfüße 5 abstützen, selbsttätig ausgeglichen werden. Wie aus der zeichnerischen Darstellung ersichtlich ist, sind die Ansatzschrauben 14 mit ihren koaxialen Pendelachsen 15' soweit oberhalb der Tragschienen 8, 8', 18, 18' angeordnet, daß ihr Gesamtmasseschwerpunkt auch unter Berücksichtigung der Hebeeinrichtungen 10 in jedem Falle unterhalb der Pendelachse 15' liegt.

Die beiden Stützbeine 6 sind jeweils durch eine auf einen stirnseitig nach unten ragenden Gewindezapfen 45 aufgeschraubte Gewindemutter 46 mit einem Horizontalschenkel 16 eines winkelblechartigen Stützfußes 5 verschraubt. Die Stützfüße 5 lassen sich dadurch gegenüber der Hebebrücke 1, um die vertikale Schwenkachse 17 verschwenken. Dies ermöglicht auch, die Hebebrücke 1 in einer zu den Tragschienen 8, 18 schrägen oder diagonalen Lage über der Motorraumöffnung 2 anzuordnen.
Die annähernd trapezförmigen Vertikalschenkel 19 der Stützfüße 5 sind an unterseitigen Vorsprüngen 27 mit einer eine weiche und rutschfeste Auflage ergebenden Schuhen 20 überzogen, die in die Kotflügelrillen 4 passend und rutschsicher eingesetzt werden können.

Die Vorsprünge 27 mit den Schuhen 20 sind in Bezug auf die Schwenkachse 17 unsymmetrisch angeordnet, so daß sich bei einem Verschwenken eines Stützfußes 5 um 180°eine andere versetzte Position der Schuhe 20 ergibt. Dadurch ist es ohne weiteres möglich, das Aufsetzen der Schuhe 20 auf eventuell in einer Kotflügelrille 4 vorhandene Schraubenköpfe zu vermeiden, ohne daß die optimale Arbeitsposition der Tragschienen.8, 18 verlassen werden muß.

Weil die Gliederketten 12 durch den Zwischenraum 9 zwischen den Tragschienen 8 und 18 hindurch geführt sind, kann das Auftreten von Kippmomenten an den Tragschienen 8, 18 beim Anhängen einer Last an den Gliederketten 12 sicher vermieden werden.

Die in Fig. 4 erkennbare Lage der Tragschienen 8, 8',18 und 18' in der jeweils eine ihrer Diametralebenen 32 in Gebrauchslage zumindest annähernd vertikal verläuft, ergibt den Vorteil einer erheblichen Vergrößerung der unter Last aufeinanderliegenden Berührungsflächen zwischen den Führungsrohren 11 und den Tragschienen 8, 18. Durch sie wird die Verschiebbarkeit der Hebeeinrichtungen 10 auf den Tragschienen 8, 18 wesentlich erleichtert.

## Patentansprüche

1. Hebebrücke zum Einbau und Ausbau von Kraftfahrzeugteilen mit einem Tragegestell (1), das an beiden Enden einer teleskopartig ausziehbaren Tragschiene (8, 18) Stützlaschen (7) mit Stützfüßen (5, 6) aufweist, durch welche es an den Rändern einer Motorraumöffnung (43) der Karosserie abstützbar ist, und mit zwei auf dem Tragegestell (8, 18) individuell verschiebbar geführten Hebeeinrichtungen (10), welche jeweils ein durch drehende Betätigung heb- und senkbares durch Selbsthemmung in seiner Lage verharrendes Hebeglied (12) aufweisen,
**dadurch gekennzeichnet**,
daß das Tragegestell (1) aus zwei in einem seitlichen Abstand parallel zueinander verlaufende teleskopartig ausziehbaren Tragschienen (8, 8', 18, 18') besteht, auf denen die Hebeeinrichtungen (10) mittels Führungsrohren (11) formschlüssig geführt sind, und daß die Hebeeinrichtungen (10) ein jeweils zwischen den Tragschienen (8, 8', 18, 18') hindurchgeführtes flexibles Zugglied (12) aufweisen, das mittels eines in Zugrichtung selbsthemmenden Schneckengetriebes (19) der Hebeeinrichtung (10) betätigbar ist.

2. Hebebrücke nach Anspruch 1, dadurch gekennzeichnet, daß das Schneckengetriebe (31) aus einer um eine vertikale Achse (22') drehbaren Schnecke (22) und einem um eine horizontale Achse (26) drehbaren Schneckenrad (28) besteht, die in einem geschlossenen Gehäuse (43) gelagert sind, und daß die Schnecke (22) mit einem oberseitig aus dem Gehäuse (43) herausragenden Schlüsselkopf (24) versehen ist.

3. Hebebrücke nach Anspruch 1 oder Anspruch 2, dadurch gekennzeichnet, daß das Schneckenrad (28) mit einem Kettenrad (21) verbunden ist und daß das flexible Zugglied (12) eine mit dem Kettenrad (21) formschlüssig in Eingriff stehende Gliederkette (12) ist.

4. Hebebrücke nach einem der Ansprüche 1 bis 3, dadurch gekennzeichnet, daß im Gehäuse (43) oberhalb des Kettenrades (21) eine etwa halbkreisförmige Kettenführung (29) angeordnet ist.

5. Hebebrücke nach einem der Ansprüche 1 bis 4, dadurch gekennzeichnet, daß die an den vertikalen, starr mit den freien Enden der beiden Tragschienen (8, 8', 18, 18') verbundenen Stützlaschen (7) jeweils mittels zueinander koaxialen Pendelgelenken (15) an im wesentlichen vertikalen Stützbeinen (6) um eine im wesentlichen horizontale Pendelachse (15') pendelnd gelagert sind.

6. Hebebrücke nach Anspruch 1 oder 5, dadurch gekennzeichnet, daß die unteren Enden der Stützbeine (6) mit Stützfüßen (5) versehen sind, die jeweils um im wesentlichen vertikale Schwenkachsen (17) der Stützbeine (6) verstellbar sind.

7. Hebebrücke nach Anspruch 6, dadurch gekennzeichnet, daß die Stützfüße (5) jeweils unsymmetrisch zu den Schwenkachsen (17) angerordnete, nach unten gerichtete Vorsprünge (27) aufweisen, die mit weichen, rutschfesten Schuhen (20) versehen sind.

8. Hebebrücke nach einem der Ansprüche 1 bis 7, dadurch gekennzeichnet, daß die beiden Tragschienen (8, 8', 18, 18') jeweils aus verschiebbar ineinander geführten, rechteckigen, insbesondere quadratischen Rohren bestehen, die an den Stützlaschen (7) so befestigt sind, daß jeweils eine ihrer Diametralebenen (32) in Gebrauchslage zumindest annähernd vertikal verläuft

## Claims

1. Lift bridge for the installation and the removal of vehicle parts with a support frame (1), which at both ends of a telescopically extensible support rail (8, 18) comprises support plates (7) with support feet (5, 6), by which it can be supported against the edges of an engine compartment opening (43) in the bodywork and with two lifting devices (10) guided to slide individually on the support frame (8, 18), which each comprise a lifting member (12), which is able to be raised and lowered by rotary actuation and remains in its position due to self-locking, characterised in that the support frame (1) consists of two telescopically extensible support rails (8, 8', 18, 18') extending parallel to each other with a lateral spacing, on which the lifting devices (10) are guided in a form-locking manner by means of guide tubes (11) and that the lifting devices (10) comprise a flexible pulling member (12) guided through respectively between the support rails (8, 8', 18, 18'), which pulling member can be actuated by means of a worm drive (19) of the lifting device (10), which worm drive is self-locking in the pulling direction.

2. Lift bridge according to Claim 1, characterised in that the worm drive (31) consists of a worm (22) able to rotate about a vertical axis (22') and a worm wheel (28) able to rotate about a horizontal axis (26), which are mounted in a closed housing (43), and that the worm (22) is provided with a wrench head (24) projecting from the housing (43) on the upper side.

3. Lift bridge according to Claim 1 or Claim 2, characterised in that the worm wheel (28) is connected to a chain wheel (21) and that the flexible pulling member (12) is a link chain (12) meshing positively with the chain wheel (21).

4. Lift bridge according to one of Claims 1 to 3, characterised in that an approximately semi-circular chain guide (29) is located in the housing (43) above the chain wheel (21).

5. Lift bridge according to one of Claims 1 to 4, characterised in that the support plates (7) rigidly connected to the free ends of the two support rails (8, 8', 18, 18') are mounted resepctively by means of pendulum articulations (15), which are coaxial with each other, on substantially vertical support legs (6) to swing about a substantially horizontal pendulum axis (15').

6. Lift bridge according to Claim 1 or 5, characterised in that the lower ends of the support legs (6) are provided with support feet (5), which are adjustable in each case about substantially vertical swivel axes (17) of the support legs (6).

7. Lift bridge according to Claim 6, characterised in that the support feet (5) comprise downwardly directed projections (27) arranged respectively asymmetrically with respect to the swivel axes (17), which projections (27) are provided with soft non-slip shoes (20).

8. Lift bridge according to one of Claims 1 to 7, characterised in that the two support rails (8, 8', 18, 18') consist respectively of rectangular, in particular square tubes guided to slide one in the other, which are attached to the support plates (7) so that respectively one of their diametral planes (32) extends at least approximately vertically in the position of use.

## Revendications

1. Elévateur pour le montage et le démontage de composants de voiture, comprenant un cadre porteur (1) équipé aux deux extrémités d'un rail de support (8, 18) télescopique, de pattes d'appui (7) avec des pieds d'appui (5, 6) par lesquels il peut prendre appui sur les bords d'une ouverture (43) du compartiment moteur de la carrosserie, et deux dispositifs de levage (10) guidés, déplaçables individuellement sur le cadre porteur (8, 18), équipés chacun d'un organe de levage (12) pouvant être monté et descendu par commande tournante et maintenu dans sa position par blocage automatique, **caractérisé en ce** que le cadre porteur (1) se compose de deux rails de support (8, 8', 18, 18') qui s'étendent à distance latérale parallèlement l'un par rapport à l'autre et sur lesquels les dispositifs de levage (10) sont guidés à engagement positif au moyen de tubes de guidage (11), et que les dispositifs de levage (10) comportent un organe de traction flexible (12) passé à chaque fois entre les rails de support (8, 8', 18, 18'), qui peut être actionné au moyen d'un engrenage à vis sans fin (19) du dispositif de levage (10) à blocage automatique dans la direction de traction.

2. Elévateur selon la revendication 1, caractérisé en ce que l'engrenage à vis sans fin (31) se compose d'une vis sans fin (22) tournant autour d'un axe vertical (22') et d'une roue tangente (28) tournant autour d'un axe horizontal (26), qui sont logées dans un carter (43) fermé, et que la vis sans fin (22) est munie d'une tête de clé (24) qui dépasse vers le haut du carter (43).

3. Elévateur selon la revendication 1 ou 2, caractérisé en ce que la roue tangente (28) est couplée avec un barbotin (21), et que l'organe de traction flexible (12) est une chaîne à maillons (12) qui s engrène à engagement positif avec le barbotin (21).

4. Elévateur selon l'une des revendications 1 à 3, caractérisé en ce que dans le carter (43), un guide-chaîne (29) sensiblement de forme semi-circulaire est disposé au-dessus du barbotin (21).

5. Elévateur selon l'une des revendications 1 à 4, caractérisé en ce que les pattes d'appui (7) verticales solidarisées avec les extrémités libres des deux rails de support (8, 8', 18, 18') sont fixées à chaque fois, au moyen d'articulations à pendule (15) coaxiales, sur des béquilles (6) sensiblement verticales, de façon à pouvoir osciller autour d'un axe de balancement (15') sensiblement horizontal.

6. Elévateur selon la revendication 1 ou 5, caractérisé en ce que les extrémités inférieures des béquilles (6) sont munies de pieds d'appui (5) qui peuvent respectivement être déplacés autour d'axes de pivotement (17) sensiblement verticaux des béquilles (6).

7. Elévateur selon la revendication 6, caractérisé en ce que les pieds d'appui (5) comportent à chaque fois des saillies (27) disposées de manière asymétrique par rapport aux axes de pivotement (17) et dirigées vers le bas, lesquelles sont recouvertes de patins (20) souples et antidérapants.

8. Elévateur selon l'une des revendications 1 à 7, caractérisé en ce que les deux rails de support (8, 8', 18, 18') se composent respectivement de deux tubes de section rectangulaire et notamment carrée, coulissant les uns dans les autres et fixés sur les pattes d'appui (7) de telle façon que respectivement l'un de leurs plans diamétraux (32) s'étend dans la position d'utilisation au moins approximativement dans le sens vertical.
